# EUROPÄISCHE PATENTANMELDUNG

(11) **EP 3 048 583 A1**
(43) Veröffentlichungstag der Anmeldung: **27.07.2016**
(21) Anmeldenummer: 15152131.7
(22) Anmeldetag: 22.01.2015
(51) Int. Cl.: G07B 15/02

(54) **System und einem Verfahren zur Erfassung des Bezugs einer gebührenpflichtigen Leistung**

(71) Anmelder: Siemens Schweiz AG, 8047 Zürich (CH)
(72) Erfinder: Fischer, Michael, 8932 Mettmenstetten (CH)
(74) Vertreter: Maier, Daniel Oliver

(57) **Zusammenfassung**

Die vorliegende Erfindung offenbart ein System und ein Verfahren zur Erfassung einer gebührenpflichtigen Leistung eines Leistungsproviders, wie z.B. der Beförderung mit einer Liftanlage eines Skigebiets oder mit einem Fahrzeugs eines öffentlichen Verkehrsnetzwerks und dergleichen, umfassend die folgenden Schritte:
a) Bereitstellen eines mobilen Kommunikationsgeräts (2), wie z.B. Mobiltelefon, iPad, PDA oder dergleichen, welches eine Mobilfunk-Funktionalität (z.B. 2G, 3G, EDGE, UMTS) aufweist;
b) Bereitstellen einer Applikation (App) auf dem mobilen Kommunikationsgerät (2), mit der die Beanspruchung der gebührenpflichtigen Leistung mit der Erfassung eines bestimmbaren Einsteigeortes (A) und des Einsteigezeitpunkts und mit der Erfassung eines bestimmbarem Ausstiegsortes und des Ausstiegszeitpunkts in einem Hintergrundsystem eines Mobilfunkbetreibers aufgezeichnet wird;
c) Aufrufen der Erfassung des Einsteigeortes an dem mobilen Kommunikationsgerät, wobei in Antwort auf das Aufrufen des Erfassens vom mobilen Kommunikationsgerät eine Start-SMS an das Hintergrundsystem ausgesendet wird, wobei in dem Hintergrundsystem mit dem Eintreffen dieser Start-SMS der Einsteigeort mit dem Ort der Basisstation (6 bis 18), an der das mobile Kommunikationsgerät (2) aktuell erfasst ist, gleichgesetzt wird und der Einsteigezeitpunkt mit dem Zeitpunkt des Eintreffens der Start-SMS am Hintergrundsystem gleichgesetzt wird,
d) Aufrufen der Erfassung des Ausstiegsortes an dem mobilen Kommunikationsgerät, wobei in Antwort auf das Aufrufen des Erfassens vom mobilen Kommunikationsgerät eine Ziel-SMS an das Hintergrundsystem ausgesendet wird, wobei in dem Hintergrundsystem mit dem Eintreffen dieser Ziel-SMS der Ausstiegsort mit dem Ort der Basisstation (6 bis 18), an der das mobile Kommunikationsgerät (2) aktuell erfasst ist, gleichgesetzt wird und der Einsteigezeitpunkt mit dem Zeitpunkt des Eintreffens der Ziel-SMS am Hintergrundsystem gleichgesetzt wird;
e) Erstellen eines Datensatzes (24) im Hintergrundsystem, wobei der Datensatz den erfassten Einsteigeort (A), den erfassten Einsteigezeitpunkt, den erfassten Ausstiegsort (D) und den erfassten Ausstiegszeitpunkt sowie ggfs. die Identität des mobilen Kommunikationsgeräts (2) repräsentierende Daten, wie z.B. dessen Mobilfunknummer und/oder dessen Geräte-ID-Nummer, umfasst; und
f) Auswerten des Datensatzes zur Ermittlung der zwischen dem Einsteigeort und dem Ausstiegsort überstrichenen Tarifzonen und zur Ermittlung des den überstrichenen Tarifzonen entsprechenden Fahrpreises.

## Beschreibung

Die vorliegende Erfindung befasst sich mit einem System und einem Verfahren zur Erfassung einer gebührenpflichtigen Leistung, z.B. der Beförderungsleistung im öffentlichen Verkehr.

Die vorliegende Erfindung befasst sich mit einem System und einem Verfahren zur Erfassung einer gebührenpflichtigen Beförderungsleistung, z.B. der Beförderungsleistung im öffentlichen Nahverkehr oder in einem Skigebiet. Der Zugang zu Beförderungsanlagen in Skigebieten wird heute so gelöst, dass der Kunde an einer Kasse des Skigebiets ein Ticket erwirbt, das zunehmend als elektronische Chip-Karte ausgestaltet ist und den in der Regel unbeschränkten Zugang zu den Liftanlagen des Skigebiets für den gekauften Zeitraum freischalten kann. Alternativ kann der Skipass online erworben werden und muss dann an der Kasse im Skigebiet nur noch in die entsprechende Chip-Karte umgetauscht werden. Beide Verfahren haben jedoch den Nachteil, dass der Kunde im Besonderen in den Zeiten der Hochsaison zum Teil lange Wartezeiten in Kauf nehmen muss, was beispielsweise bei einem Tagestouristen einen nicht vernachlässigbaren Teil seines Skitages kosten kann. Im öffentlichen Nah- und Fernverkehr sind aus dem Projekt EasyR!de (2000, 2001) Chipkarten im Kreditkartenformat bekannt, die im Wege einer bidirektionalen Kommunikation im Fahrzeug die Anwesenheit der Chipkarte fahrzeugseitig erfassen und speichern. Die erfassten Chipkarten und die zurückgelegten Strecken werden dann von den Fahrzeuggeräten an entsprechende Auswerteeinheiten übertragen, die dann die weitere Nachbearbeitung und Vergebührung veranlassen.

Während dem erstgenannten Beispiel der Mangel anhaftet, dass der Kunde erst am Ticketschalter eine entsprechende Chipkarte erwerben muss und dann erst die für einen vorbestimmten Zeitraum bezahlte Leistung beziehen kann, leidet das zweitgenannte Beispiel besonders unter einem Energieproblem auf der Chipkarte, die wunschgemäss in ihren Abmessung einer Kreditkarte entsprechen und einen Energievorrat für eine etwa dreijährige Nutzung der Chipkarte aufweisen soll. Weiter sind bei diesem System hohe Installationskosten aufzuwenden, weil jedes Fahrzeug mit entsprechenden Funkmitteln für das Aufwecken der Chipkarten beim Einsteigen und für die bidirektionale Kommunikation während der Fahrt auszustatten ist.

Dieses Problem wurde im Skipassbeispiel bisher in der Regel dadurch gelöst, dass die Anzahl der Verkaufsstellen dem Andrang der Skitouristen angepasst wurde. Diese Anpassung setzt aber eine kostspielige Infrastruktur voraus, die nur in den Zeiten der Hochsaison auch tatsächlich genutzt wird. Neben den Schaltern und der technischen Infrastruktur muss natürlich auch noch eine entsprechende Menge von geschultem Personal für den Schalterdienst bereitstehen. Im öffentlichen Nahverkehr gab es sehr erfolgversprechende Versuche (Basel, IMPD), denen aber die vorstehend genannten Nachteile anhafteten und an denen die Kommerzialisierung des Systems wohl auch zum damaligen Zeitpunkt gescheitert ist.

Die vorliegende Erfindung soll daher ein System und ein Verfahren zur Erfassung einer gebührenpflichtigen Leistung, insbesondere einer Beförderungsleitung eine Lösung angegeben, bei der die Bewirtschaftung der Energie auf einer elektronischen Chipkarte vernachlässigbar ist und bei der ebenfalls die hohen Investitionskosten für die in die Fahrzeuge zu installierende Weck- und Erfassungs-Infrastruktur obsolet werden sollen. Im Besonderen setzt die nachfolgende Lösung jedoch voraus, der Nutzer der gebührenpflichtigen Leistung beim Start und am Ende seiner Nutzung der gebührenpflichtigen Leistung jeweils kurz mitwirkt.

Bezüglich des Verfahrens wird diese Aufgabe erfindungsgemäss dadurch gelöst, dass ein Verfahren zur Erfassung einer gebührenpflichtigen Leistung eines Leistungsproviders, wie z.B. der Beförderung mit einer Liftanlage eines Skigebiets oder mit einem Fahrzeugs eines öffentlichen Verkehrsnetzwerks und dergleichen, umfassend die folgenden Schritte:
a) Bereitstellen eines mobilen Kommunikationsgeräts, wie z.B. Mobiltelefon, iPad, PDA oder dergleichen, welches eine Mobilfunk-Funktionalität, z.B. 2G, 3G, EDGE, UMTS, aufweist;
b) Bereitstellen einer Applikation auf dem mobilen Kommunikationsgerät, mit der die Beanspruchung der gebührenpflichtigen Leistung mit der Erfassung eines bestimmbaren Einsteigeortes und des Einsteigezeitpunkts und mit der Erfassung eines bestimmbarem Ausstiegsortes und des Ausstiegszeitpunkts in einem Hintergrundsystem eines Mobilfunkbetreibers aufgezeichnet wird;
c) Aufrufen der Erfassung des Einsteigeortes an dem mobilen Kommunikationsgerät, wobei in Antwort auf das Aufrufen des Erfassens vom mobilen Kommunikationsgerät eine Start-SMS an das Hintergrundsystem ausgesendet wird, wobei in dem Hintergrundsystem mit dem Eintreffen dieser Start-SMS der Einsteigeort mit dem Ort der Basisstation, an der das mobile Kommunikationsgerät aktuell erfasst ist, gleichgesetzt wird und der Einsteigezeitpunkt mit dem Zeitpunkt des Eintreffens der Start-SMS am Hintergrundsystem gleichgesetzt wird,
d) Aufrufen der Erfassung des Ausstiegsortes an dem mobilen Kommunikationsgerät, wobei in Antwort auf das Aufrufen des Erfassens vom mobilen Kommunikationsgerät eine Ziel-SMS an das Hintergrundsystem ausgesendet wird, wobei in dem Hintergrundsystem mit dem Eintreffen dieser Ziel-SMS der Ausstiegsort mit dem Ort der Basisstation, an der das mobile Kommunikationsgerät aktuell erfasst ist, gleichgesetzt wird und der Einsteigezeitpunkt mit dem Zeitpunkt des Eintreffens der Ziel-SMS am Hintergrundsystem gleichgesetzt wird;
e) Erstellen eines Datensatzes im Hintergrundsystem, wobei der Datensatz den erfassten Einsteigeort, den erfassten Einsteigezeitpunkt, den erfassten Ausstiegsort und den erfassten Ausstiegszeitpunkt sowie ggfs. die Identität des mobilen Kommunikationsgeräts repräsentierende Daten, wie z.B. dessen Mobilfunknummer und/oder dessen Geräte-ID-Nummer, umfasst; und
f) Auswerten des Datensatzes zur Ermittlung der zwischen dem Einsteigeort und dem Ausstiegsort überstrichenen Tarifzonen und zur Ermittlung des den überstrichenen Tarifzonen entsprechenden Preises, insbesondere Fahrpreises.

Bezüglich des Systems wird diese Aufgabe erfindungsgemäss durch ein System zur Erfassung einer gebührenpflichtigen Leistung eines Leistungsproviders, wie z.B. der Beförderung mit einer Liftanlage eines Skigebiets oder mit einem Fahrzeug eines öffentlichen Verkehrsnetzwerks und dergleichen, umfassend:
a) ein mobiles Kommunikationsgerät, wie z.B. Mobiltelefon, i-Pad, PDA oder dergleichen, welches eine Mobilfunk-Funktionalität, z.B. 2G, 3G, EDGE, UMTS, LTE, aufweist;
b) eine auf dem mobilen Kommunikationsgerät ausführbare Applikation, mit der die Beanspruchung der gebührenpflichtigen Leistung mit der Erfassung eines bestimmbaren Einsteigeortes und des Einsteigezeitpunkts und mit der Erfassung eines bestimmbarem Ausstiegsortes und des Ausstiegszeitpunkts aufzeichenbar ist;
c) besagte Applikation ertüchtigt zum Aufrufen der Erfassung des Einsteigeortes und des Einsteigezeitpunktes, wobei in Antwort auf das Aufrufen des Erfassens vom mobilen Kommunikationsgerät eine Start-SMS an das Hintergrundsystem ausgesendet wird, wobei in dem Hintergrundsystem mit dem Eintreffen dieser Start-SMS der Einsteigeort mit dem Ort der Basisstation, an der das mobile Kommunikationsgerät aktuell erfasst ist, gleichsetzbar ist und der Einsteigezeitpunkt mit dem Zeitpunkt des Eintreffens der Start-SMS am Hintergrundsystem gleichsetzbar ist,
d) besagte Applikation ertüchtigt zum Aufrufen der Erfassung des Ausstiegsortes und des Ausstiegszeitpunktes, wobei in Antwort auf das Aufrufen des Erfassens vom mobilen Kommunikationsgerät eine Ziel-SMS an das Hintergrundsystem ausgesendet wird, wobei in dem Hintergrundsystem mit dem Eintreffen dieser Ziel-SMS der Ausstiegsort mit dem Ort der Basisstation, an der das mobile Kommunikationsgerät aktuell erfasst ist, gleichsetzbar ist und der Einsteigezeitpunkt mit dem Zeitpunkt des Eintreffens der Ziel-SMS am Hintergrundsystem gleichsetzbar ist;
e) besagtes Hintergrundsystem ertüchtigt zum Erstellen eines Datensatzes im Hintergrundsystem, wobei der Datensatz den erfassten Einsteigeort, den erfassten Einsteigezeitpunkt, den erfassten Ausstiegsort und den erfassten Ausstiegszeitpunkt sowie ggfs. die Identität des mobilen Kommunikationsgeräts repräsentierende Daten, wie z.B. dessen Mobilfunknummer und/oder dessen Geräte-ID-Nummer, umfasst; und
f) besagtes Hintergrundsystem oder ein separates Auswertesystem ertüchtigt zum Auswerten des Datensatzes zur Ermittlung der zwischen dem Einsteigeort und dem Ausstiegsort überstrichenen Tarifzonen und zur Ermittlung des den überstrichenen Tarifzonen entsprechenden Preises, insbesondere Fahrpreises.

Die vorliegende Erfindung löst das Problem der Erfassung einer gebührenpflichtigen Beförderungsleistung somit durch die intelligente Nutzung bereits bestehender Infrastrukturen zur Ortung von Mobiltelefonen, was mittels der seitens der Basisstation, an der das mobile Kommunikationsgerät angekoppelt ist, bereitstellbaren Ortsinformation erzielt werden kann. Damit ist auf den Fahrzeugen keinerlei Installation von Kommunikationseinrichtung zur Erfassung der Mobiltelefone oder anderer elektronischer Chip-Karten erforderlich, sondern im Wege der entsprechend programmierten Applikation kann dieses Problem quasi ausschliesslich softwareseitig im Hintergrundsystem des Mobilfunkbetreibers gelöst werden. Energieprobleme sind grundsätzlich aufgrund der auf einem mobilen Kommunikationsgerät verfügbaren Energiemenge eher vernachlässigbar und treten nur dann auf, wenn der Nutzer des Mobiltelefons das rechtzeitige Laden seines Mobiltelefons verpasst. In einem solchen Fall ist dann das Papierticket die sinnvolle Rückfallebene.

Das gemäss der Erfindung vorgeschlagene Erfassungssystem ist leider nicht vollkommen betrugssicher, weil beispielsweise ein Fahrgast einer S-Bahn die Erfassung des Einstiegsortes erst dann veranlassen könnte, wenn dieser fehlbare Fahrgast das Kontrollpersonal erblickt. Aus diesem Grund kann es in einer vorteilhaften Weiterbildung der Erfindung vorgesehen sein, dass mit der Installation der Applikation auf dem mobilen Kommunikationsgerät die Position des mobilen Kommunikationsgeräts periodisch erfasst wird, wobei die Position mittels der Ortsinformation der Basisstation, an der das mobile Kommunikationsgerät aktuell erfasst ist, ermittelt wird und der Zeitpunkt dieser Positionserfassung mittels der Auswertung der mit der Ortsinformation assoziierten Zeitinformation oder mittels der Auswertung der Systemzeit des Hintergrundsystems ermittelt wird. Somit wird es dem Kontrollpersonal bei einer Kontrolle ermöglicht, den Weg, den das mobile Kommunikationsgerät vor der Kontrolle zurückgelegt hat, nachzuvollziehen und mit der Zuglaufzeit abzugleichen. Die Applikation kann hierzu den geographischen Verlauf der relevanten zuvor erfassten Positionsdaten graphisch darstellen und beispielsweise auf die exakte Fahrstrecke abbilden.

Da die Positionsermittlung den Ort der Basisstation verwendet, an der das mobile Kommunikationssystem gerade aktuell angekoppelt ist, wird auf einem mobilen Kommunikationsgerät so gut wie keine elektrische Energie zur Positionserfassung verbraucht.

Vorteilhafte Ausgestaltungen der vorliegenden Erfindung werden nachfolgend detailliert mit Bezug auf die anhängenden Zeichnungen erläutert. Dabei zeigt:
- Fig. 1: in schematischer Darstellung ein Mobiltelefon mit einer Applikation zur Erfassung einer Beförderungsleistung; und
- Fig. 2: in schematischer Darstellung einem Ablauf eines Verfahrens zur Erfassung der Beförderungsleistung mit einem Mobiltelefon gemäss Figur 1.

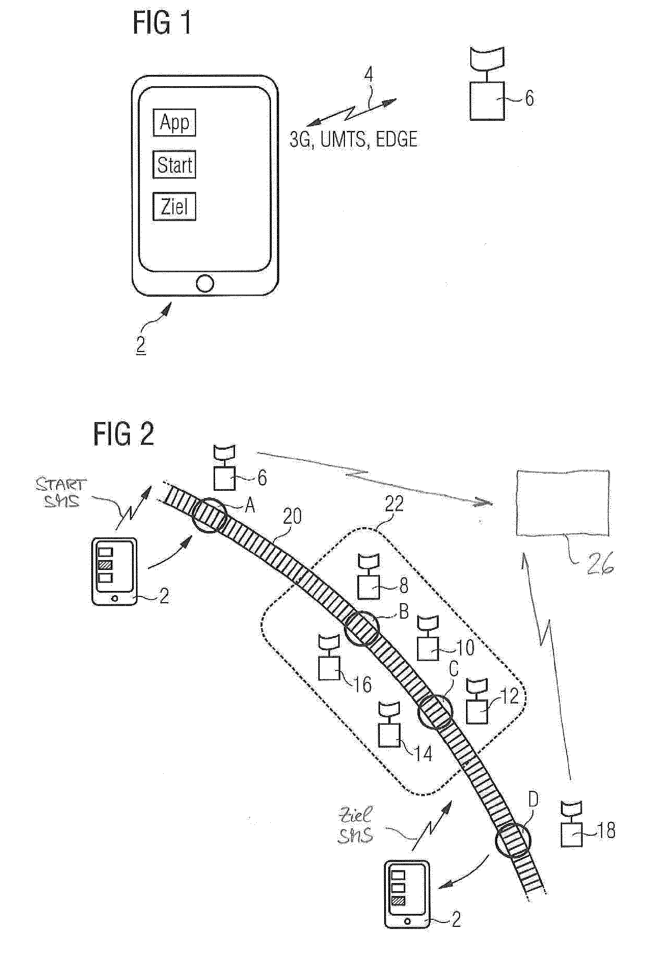

Figur 1 zeigt in schematischer Darstellung ein Mobiltelefon 2, auf dem eine Applikation App installiert ist, mit der die Beanspruchung der gebührenpflichtigen Leistung - hier der Beförderungsleistung in einer S-Bahn - mit der Erfassung eines bestimmbaren Einsteigeortes und des Einsteigezeitpunkts und mit der Erfassung eines bestimmbarem Ausstiegsortes und des Ausstiegszeitpunkts aufgezeichnet wird. Das Mobiltelefon 2 unterstützt dabei nahezu beliebige Funkformate, wie z.B. GSM, UMTS, EDGE, WLAN und dergleichen, was durch einen Pfeil 4 dargestellt sein soll. Das Mobiltelefon 2 koppelt dabei bei der Verfügbarkeit eines von einer oder mehreren Basisstationen 6 bereitgestellten Mobilfunknetzes immer an genau einer aktiven Basisstation 6 an. Diese Basisstation 6 verfügt über eine Cell-ID, der u.a. auch der exakte geographische Standort zugeordnet werden kann.

Das Originäre der vorliegenden Erfindung besteht in Wesentlichen in einer durch geeignete Software nutzbar gemachten Nutzung von Ortungsdiensten, die auf die Ortsinformationen zurückgreifen, die zu den Basisstationen bekannt sind. Die vorliegende Erfindung nutzt dabei auch die Tarifgestaltung der öffentlichen Nahverkehrsbetriebe aus, die beispielsweise für einen Innenstadt nur eine Tarifzone kennt und erst für die Peripherie neue Tarifzonen vorsieht. Diese Gestaltung wird im Grund durch die relativ hohe Dichte von Basisstationen im Innenstadtbereich und die geringere Dichte von Basisstationen in der Peripherie nachgebildet.

Das Wesen der Erfindung besteht in einer durch geeignete Softwareprodukte nutzbar gemachten Ortungsdienste, die im Wege der mobilen Kommunikation auf bekannten Mobilfunkstandards (3G, UMTS usw.) zurückgreifen und so im Wege einer auf einem Mobiltelefon installierten App eine Erfassung des Zustiegortes, des Ausstiegsortes und damit der zurückgelegten gebührenpflichtigen Fahrstrecke ermöglichen. Dies sei an dem nachfolgenden Beispiel im Detail erklärt:
a) Ein hier nicht weiter dargestellter Fahrgast möchte ein öffentliches Verkehrsmittel am Ort A bestigen besteigen und startet daher auf seinem Mobiltelefon die entsprechende App. Der Fahrgast drückt hierzu beispielsweise den Start-Button seiner App auf dem Smartphone 2. Mit dem Starten der App setzt das Mobiltelefon eine Start-SMS an ein Hintergrundsystem (Mobilfunknetz-Administration) ab, wodurch das Hintergrundsystem dem Zeitstempel des Eintreffens der Start-SMS die Position der Basisstation 6 hinzufügt, an der das Smartphone 2 angemeldet und über die auch die Start-SMS ursprünglich aufgenommen und im Backbone weitergeleitet worden ist. So wird die aktuelle Position des Mobiltelefons (Smartphones) mit dem Ort der Basisstation gleichgesetzt, an der das Mobiltelefon aktuell angekoppelt ist. Diese Ortsinformation ist nicht ganz genau; sie dürfte aber aufgrund der hohen Granularität der Basisstationen gerade im städtischen Umfeld der Haltestellen des öffentlichen Nahverkehrs hinreichend sein. Hier wirkt sich zudem positiv aus, dass die räumliche Dichte der Basisstationen gerade mit den zunehmenden Datenübertragungsraten der modernsten Mobilfunkstandards entsprechend hoch ist, also z.B. etwa 100 bis 500 m in Innenstädten. Auf dem Land kann davon ausgegangen werden, dass die Haltestellen in der Regel in besiedelten Gebieten, z.B. selbst in kleinen Dörfern, liegen und dort auch eine entsprechende Basisstation vor Ort vorhanden ist.
b) Mit dem Einsteigen bzw. auch entsprechend davor kann es optional im Rahmen des Bedienmenues der APP noch vorgesehen sein, dass der Fahrgast bestimmt, für wie viele Personen und/oder für welche Beförderungsklasse er die Fahrpreise entrichten will.
c) Während der Fahrt des Verkehrsmittels entlang einer Fahrstrecke 20 kann die aktive App dann optional auch den Verlauf der Fahrstrecke 22 aufnehmen, und zwar in Form der Daten der während der Fahrt zugeordneten Basisstationen 8 bis 16 (repräsentiert durch einen gestrichelten Kasten 22). Dabei werden besonders die in der Nähe von Haltepunkten B und C liegenden Basisstationen sicher vorübergehend mit dem Smartphone 2 gekoppelt sein.
d) Mit der Ankunft an dem Zielort D und dem Aussteigen aus dem Verkehrsmittel beendet der Fahrgast den Erfassungsmodus der App auf seinem Mobiltelefon. Mit dem Beenden des Erfassungsmodus sendet das Smartphone (Mobiltelefon) eine Ziel-SMS an das Hintergrundsystem, wobei das Hintergrundsystem dem Zeitstempel des Eintreffens der Ziel-SMS die Position der Basisstation 18 hierzufügt, an der das Smartphone im Empfangszeitpunkt der Ziel-SMS angemeldet ist und über die auch die Ziel-SMS ursprünglich aufgenommen und in den Backbone weitergeleitet worden ist.
e) Das Hintergrundsystem 26 ist nun in der Lage einen Datensatz zu erstellen, der die Position der Basisstation zum App-Start mit dem Eintreffen der Start SMS als Einstiegsort und zum App-Stopp mit dem Eintreffen der Ziel SMS als Startort bzw. als Zielort der Fahrt definiert. Dabei wird jeweils der entsprechende Zeitstempel des Eintreffens und Start- und Ziel-SMS und eine ID des Smartphones (z.B. dessen Mobilfunknummer) dem Datensatz hinzugefügt. Aus diesem Datensatz kann nun grob die zurückgelegte Strecke rekonstruiert werden.
f) Diese rekonstruierte Strecke kann nun direkt von dem Hintergrundsystem 26 des Mobilfunkbetreibers mit einer entsprechenden Tariftabelle abgeglichen und der Fahrpreis bestimmt werden. Zur Bestimmung des Fahrpreises kann der o.g. Datensatz auch an ein Tarifsystem des ÖV-Betreibers weitergeleitet und dort ausgewertet werden. Eine Abrechnung kann dann beispielsweise über die Mobilfunkrechnung oder natürlich auch durch eine separate Abrechnung des Erbringers der Beförderungsleistung erfolgen.

Zur Kontrolle können die auf dem Smartphone 2 erfassten Daten ausgewertet werden. Um einen Betrug durch verspätetes Starten der App verhindern zu können, können auf dem Mobiltelefon auch die vor dem Starten der App gespeicherten Ortungsdaten der überstrichenen Basisstationen im Hintergrundsystem ausgewertet werden. Startet der fehlbare Fahrgast die App beispielsweise erst mit dem Erblicken des Kontrollpersonals, so kann dieses anhand des zeitlichen und räumlichen Verlaufs der erfassten Ortungsdaten sicher darauf schliessen, dass sich der Fahrgast schon vor dem Starten der App in dem Fahrzeug befunden haben muss. Ebenso kann der Startzeitpunkt der App zur Betrugsermittlung herangezogen werden. Der auf dem Mobiltelefon gespeicherte zeitliche und räumliche Verlauf der Ortungsdaten kann beispielsweise periodisch gelöscht werden, z.B. alle 24 Stunden in der Nacht oder immer dann, wenn das Mobiltelefon seine Position für eine vorbestimmte Zeitdauer nicht ändert (beides natürlich nur bei inaktiver App). Der Schlafmodus bezeichnet dabei den Zustand, bei dem die Applikation App installiert ist und im Hintergrund mit der periodischen Erfassung der Positionsdaten läuft. Der aktive Modus ist entsprechend der Zeitraum vom Drücken des Startbuttons zur Erfassung des Einstiegsortes und der Einstiegszeit und dem Drücken des Ziel-Buttons zur Erfassung des Ausstiegsortes und der Ausstiegszeit.

Die vorliegende Erfindung löst das Problem der Erfassung einer gebührenpflichtigen Beförderungsleistung durch intelligente Nutzung bereits bestehender Infrastrukturen zur Ortung von Mobiltelefonen. Damit ist auf den Fahrzeug keinerlei Installation von Kommunikationseinrichtungen zur Erfassung der Mobiltelefon oder Chipkarten erforderlich, sondern im Wege einer entsprechend zu programmierenden App kann dieses Problem quasi ausschliesslich softwareseitig gelöst werden. Energieprobleme sind grundsätzlich aufgrund der auf einem Mobiltelefon verfügbaren Energiemenge vernachlässigbar und treten nur dann auf, wenn der Nutzer des Mobiltelefons das rechtzeitige Laden seines Mobiltelefons aus welchen Gründen auch immer verpasst. In einem solchen Fall ist das gute alte Papierticket die einzige Rückfallebene. Durch die Auswertung der Daten zu den Positionen der Basisstationen ist auch eine ausreichende räumliche Granularität gegeben. Somit bedarf es keiner weiteren Haltestellen- und/oder fahrzeugseitigen Infrastruktur.

## Patentansprüche

1. Verfahren zur Erfassung einer gebührenpflichtigen Leistung eines Leistungsproviders, wie z.B. der Beförderung mit einer Liftanlage eines Skigebiets oder mit einem Fahrzeugs eines öffentlichen Verkehrsnetzwerks und dergleichen, umfassend die folgenden Schritte:
a) Bereitstellen eines mobilen Kommunikationsgeräts (2), wie z.B. Mobiltelefon, iPad, PDA oder dergleichen, welches eine Mobilfunk-Funktionalität (z.B. 2G, 3G, EDGE, UMTS) aufweist;
b) Bereitstellen einer Applikation (App) auf dem mobilen Kommunikationsgerät (2), mit der die Beanspruchung der gebührenpflichtigen Leistung mit der Erfassung eines bestimmbaren Einsteigeortes (A) und des Einsteigezeitpunkts und mit der Erfassung eines bestimmbarem Ausstiegsortes und des Ausstiegszeitpunkts in einem Hintergrundsystem eines Mobilfunkbetreibers aufgezeichnet wird;
c) Aufrufen der Erfassung des Einsteigeortes an dem mobilen Kommunikationsgerät, wobei in Antwort auf das Aufrufen des Erfassens vom mobilen Kommunikationsgerät eine Start-SMS an das Hintergrundsystem ausgesendet wird, wobei in dem Hintergrundsystem mit dem Eintreffen dieser Start-SMS der Einsteigeort mit dem Ort der Basisstation (6 bis 18), an der das mobile Kommunikationsgerät (2) aktuell erfasst ist, gleichgesetzt wird und der Einsteigezeitpunkt mit dem Zeitpunkt des Eintreffens der Start-SMS am Hintergrundsystem gleichgesetzt wird,
d) Aufrufen der Erfassung des Ausstiegsortes an dem mobilen Kommunikationsgerät, wobei in Antwort auf das Aufrufen des Erfassens vom mobilen Kommunikationsgerät eine Ziel-SMS an das Hintergrundsystem ausgesendet wird, wobei in dem Hintergrundsystem mit dem Eintreffen dieser Ziel-SMS der Ausstiegsort mit dem Ort der Basisstation (6 bis 18), an der das mobile Kommunikationsgerät (2) aktuell erfasst ist, gleichgesetzt wird und der Einsteigezeitpunkt mit dem Zeitpunkt des Eintreffens der Ziel-SMS am Hintergrundsystem gleichgesetzt wird;
e) Erstellen eines Datensatzes (24) im Hintergrundsystem, wobei der Datensatz den erfassten Einsteigeort (A), den erfassten Einsteigezeitpunkt, den erfassten Ausstiegsort (D) und den erfassten Ausstiegszeitpunkt sowie ggfs. die Identität des mobilen Kommunikationsgeräts (2) repräsentierende Daten, wie z.B. dessen Mobilfunknummer und/oder dessen Geräte-ID-Nummer, umfasst; und
f) Auswerten des Datensatzes zur Ermittlung der zwischen dem Einsteigeort und dem Ausstiegsort überstrichenen Tarifzonen und zur Ermittlung des den überstrichenen Tarifzonen entsprechenden Preises, insbesondere Fahrpreises.

2. Verfahren nach Anspruch 1,
**dadurch gekennzeichnet, dass**
mit der Installation der Applikation (App) auf dem mobilen Kommunikationsgerät (2) die Position des mobilen Kommunikationsgeräts (2) periodisch erfasst wird, wobei die Position mit dem Ort der Basisstation (6 bis 18), an der das mobile Kommunikationsgerät (2) aktuell erfasst ist, gleichgesetzt wird.

3. Verfahren nach Anspruch 2,
**dadurch gekennzeichnet, dass**
ein räumlicher Abstand der gerade ermittelten Position in Vergleich zur vorhergehend ermittelten Position bestimmt wird, wobei die Periodendauer bis zur nächsten Positionsermittlung in Abhängigkeit von dem bestimmten räumlichen Abstand bestimmt wird.

4. Verfahren nach Anspruch 3,
**dadurch gekennzeichnet, dass**
sich die Periodendauer zu einem zunehmenden räumlichen Abstand umgekehrt proportional abnehmend verhält und umgekehrt.

5. Verfahren nach einem der vorangehenden Ansprüche 1 bis 4,
**dadurch gekennzeichnet, dass**
der Datensatz an den Betreiber der gebührenpflichtigen Infrastruktur übertragen wird.

6. System zur Erfassung einer gebührenpflichtigen Leistung eines Leistungsproviders, wie z.B. der Beförderung mit einer Liftanlage eines Skigebiets oder mit einem Fahrzeugs eines öffentlichen Verkehrsnetzwerks und dergleichen, umfassend:
a) ein mobiles Kommunikationsgerät (2), wie z.B. Mobiltelefon, IPad, PDA oder dergleichen, welches eine Mobilfunk-Funktionalität (z.B. 2G, 3G, EDGE, UMTS) aufweist;
b) eine auf dem mobilen Kommunikationsgerät (2) ausführbare Applikation (App), mit der die Beanspruchung der gebührenpflichtigen Leistung mit der Erfassung eines bestimmbaren Einsteigeortes (A) und des Einsteigezeitpunkts und mit der Erfassung eines bestimmbarem Ausstiegsortes (D) und des Ausstiegszeitpunkts aufzeichenbar ist;
c) besagte Applikation (App) ertüchtigt zum Aufrufen der Erfassung des Einsteigeortes (A) und des Einsteigezeitpunktes, wobei in Antwort auf das Aufrufen des Erfassens vom mobilen Kommunikationsgerät eine Start-SMS an das Hintergrundsystem ausgesendet wird, wobei in dem Hintergrundsystem mit dem Eintreffen dieser Start-SMS der Einsteigeort mit dem Ort der Basisstation (6 bis 18), an der das mobile Kommunikationsgerät (2) aktuell erfasst ist, gleichsetzbar ist und der Einsteigezeitpunkt mit dem Zeitpunkt des Eintreffens der Start-SMS am Hintergrundsystem gleichsetzbar ist,
d) besagte Applikation (App) ertüchtigt zum Aufrufen der Erfassung des Ausstiegsortes (D) und des Ausstiegszeitpunktes, wobei in Antwort auf das Aufrufen des Erfassens vom mobilen Kommunikationsgerät eine Ziel-SMS an das Hintergrundsystem ausgesendet wird, wobei in dem Hintergrundsystem mit dem Eintreffen dieser Ziel-SMS der Ausstiegsort mit dem Ort der Basisstation (6 bis 18), an der das mobile Kommunikationsgerät (2) aktuell erfasst ist, gleichsetzbar ist und der Einsteigezeitpunkt mit dem Zeitpunkt des Eintreffens der Ziel-SMS am Hintergrundsystem gleichsetzbar ist;
e) besagtes Hintergrundsystem ertüchtigt zum Erstellen eines Datensatzes (24) im Hintergrundsystem, wobei der Datensatz den erfassten Einsteigeort (A), den erfassten Einsteigezeitpunkt, den erfassten Ausstiegsort (D) und den erfassten Ausstiegszeitpunkt sowie ggfs. die Identität des mobilen Kommunikationsgeräts (2) repräsentierende Daten, wie z.B. dessen Mobilfunknummer und/oder dessen Geräte-ID-Nummer, umfasst; und
f) besagtes Hintergrundsystem oder ein separates Auswertesystem ertüchtigt zum Auswerten des Datensatzes zur Ermittlung der zwischen dem Einsteigeort und dem Ausstiegsort überstrichenen Tarifzonen und zur Ermittlung des den überstrichenen Tarifzonen entsprechenden Preises, insbesondere Fahrpreises.

7. System nach Anspruch 6,
**dadurch gekennzeichnet, dass**
mit der Installation der Applikation (App) auf dem mobilen Kommunikationsgerät (2) die Position des mobilen Kommunikationsgeräts (2) periodisch erfassbar ist, wobei die Position mit dem Ort der Basisstation (6 bis 18), an der das mobile Kommunikationsgerät (2) aktuell erfasst ist, gleichsetzbar ist.

8. System nach Anspruch 6 oder 7,
**dadurch gekennzeichnet, dass**
ein räumlicher Abstand der gerade ermittelten Position in Vergleich zur vorhergehend ermittelten Position bestimmbar ist, wobei die Periodendauer bis zur nächsten Positionsermittlung in Abhängigkeit von dem bestimmten räumlichen Abstand bestimmbar ist.

9. System nach Anspruch 8,
**dadurch gekennzeichnet, dass**
sich die Periodendauer zu einem zunehmenden räumlichen Abstand umgekehrt proportional abnehmend verhält und umgekehrt.

10. System nach einem der vorangehenden Ansprüche 8 bis 11,
**dadurch gekennzeichnet, dass**
der Datensatz an den Betreiber der gebührenpflichtigen Infrastruktur übertragen wird.
